# EUROPÄISCHE PATENTSCHRIFT

(11) **EP 3 388 778 B1**
(45) Veröffentlichungstag und Bekanntmachung des Hinweises auf die Patenterteilung: **11.03.2020**
(21) Anmeldenummer: 18164430.3
(22) Anmeldetag: 27.03.2018
(51) Int. Cl.: G01B 5/016

(54) **MIKROTASTER UND VERFAHREN ZUR HERSTELLUNG**
MICROBUTTON AND METHOD FOR MANUFACTURING THE SAME
JAUGE MICROSCOPIQUE ET PROCÉDÉ DE FABRICATION

(30) Priorität: 10.04.2017 DE 102017206145
(43) Veröffentlichungstag der Anmeldung: 17.10.2018
(73) Patentinhaber: Technische Universität Braunschweig, 38106 Braunschweig (DE)
(72) Erfinder: Metz, David, 38106 Braunschweig (DE); Dietzel, Andreas, 38104 Braunschweig (DE)
(74) Vertreter: Taruttis, Stefan Georg

(56) Entgegenhaltungen:
- DE-B4-102011 006 922
- JP-A- H0 431 710

## Beschreibung

Die Erfindung betrifft einen Mikrotaster, der zumindest einen Kraftsensor aufweist und der sich durch die Erzeugung eines Messsignals mit guter Linearität über einen großen Auslenkungsbereich bzw. einen großen Bewegungsbereich auszeichnet, und ein Verfahren zu dessen Herstellung. Das Verfahren erlaubt die Herstellung einer Vielzahl gleicher Kraftsensoren, von denen zumindest einer in dem Mikrotaster enthalten ist, bevorzugter zwei, noch bevorzugter drei, orthogonal miteinander zu einem Mikrotaster verbunden sind. Generell kann der Mikrotaster an einem Ende an einem beweglichen Arm z.B. von einer Messmaschine befestigt sein und optional am gegenüberliegenden Ende einen Taststift aufweisen.

### Stand der Technik

Die DE 10 2008 037 926 B3 beschreibt einen Mikrotaster, der Kraftsensoren aus Paaren paralleler Silizium-Blattfedern aufweist, die jeweils orthogonal zueinander angeordnet und durch Abstandselemente in Reihe miteinander verbunden sind. In jedem Kraftsensor weist eine Blattfeder als Dehnungssensoren piezoresistive Widerstände auf, die in einer Wheatstone-Brücke verschaltet sind.

Die DE 10 2011 006 922 B4 beschreibt als Messwandler eine Siliziumplatte, in der vier piezoresistive Widerstände integriert sind, von denen zwei im Stauchungsbereich und zwei im Dehnungsbereich eines Siliziumverformungskörpers angebracht sind und die in einer Wheatstone-Brücke verschaltet sind. Die Messwandler können auf jeweils einem von einem Paar paralleler bandförmiger Verformungskörper angebracht sein, die in Reihe und orthogonal zueinander verbunden sind.
Die JP H 0431710 A zeigt einen 3D-Mikrotaster aus drei übereinander angeordneten hohlen Vierkantprofilen aus Silicium mit Widerständen an darin geformten Festkörpergelenken.

### Aufgabe der Erfindung

Die Aufgabe der Erfindung liegt darin, einen alternativen kompakten Mikrotaster, der ein lineares Messsignal über einen großen Auslenkungsbereich erzeugt und einen einfachen Aufbau hat, bereitzustellen. Der Mikrotaster soll bevorzugt ein Verfahren zu seiner Herstellung erlauben, das kostengünstig durchgeführt werden kann.

### Beschreibung der Erfindung

Die Erfindung löst die Aufgabe mit den Merkmalen der Ansprüche, insbesondere durch einen Mikrotaster, der zumindest einen Kraftsensor aufweist, bevorzugt zwei oder drei Kraftsensoren aufweist, die orthogonal zueinander angeordnet und in einer Reihe miteinander verbunden sind, wobei jeder Kraftsensor zwei in einem Abstand parallele Wandelemente aufweist, die jeweils zwei einstückig ausgebildete Festkörpergelenke haben, an denen die Wandelemente parallel zueinander schwenkbar sind. Die Festkörpergelenke erstrecken sich quer zur Längserstreckung der Wandelemente, an deren Enden die Wandelemente durch Zwischenstücke miteinander in einem Abstand verbunden sind. Die Festkörpergelenke sind zueinander parallel und optional im gleichen Abstand zu den jeweils benachbarten Zwischenstücken angeordnet, die die Wandelemente in ihrem Abstand miteinander verbinden. Die Wandelemente bilden mit den Zwischenstücken ein Parallelogramm, das in den Festkörpergelenken schwenkbar ist. Die Kraftsensoren sind in einer Reihe miteinander verbunden, so dass sie jeweils nur an den Enden ihrer Wandelemente miteinander verbunden sind, an denen die Wandelemente mittels Zwischenstücken miteinander verbunden sind. Auch die Befestigung des Mikrotasters, z.B. an einem Koordinatenmessgerät, und die Befestigung eines Taststifts erfolgen an den Enden der Wandelemente, an denen die Wandelemente mittels Zwischenstücken miteinander verbunden werden können. Ein Taststift ist insbesondere an dem Ende eines Kraftsensors befestigt, das gegenüber einem angrenzenden Kraftsensor oder gegenüber einem Koordinatenmessgerät oder Arm liegt.

Der Mikrotaster, der einen, zwei oder drei orthogonale Kraftsensoren enthält, weist vorteilhafter Weise ein isotropes mechanisches Verhalten auf.

Bevorzugt sind die Wandelemente aus Silizium und die Festkörpergelenke haben z.B. eine Dicke von 10 bis 100 µm, bevorzugter 10 bis 50 µm oder bis 40 µm. Die Festkörpergelenke sind z.B. durch Abtragen, insbesondere Ätzverfahren, in einem Siliziumwafer erzeugt und weisen dadurch Übergangsbereiche zu den nicht abgetragenen Bereichen des Wandelements, insbesondere eines Siliziumwafers auf. Die Festkörpergelenke können durch Abtragen mittels eines Ätzverfahrens erzeugt werden, das z.B. dadurch auf einen Bereich beschränkt ist, dass die nicht abzutragenden Bereiche mit z.B. einer Schicht aus Siliziumoxid und Siliziumnitrid beschichtet sind. Es können insbesondere Siliziumwafer verwendet werden, die in einer Tiefe, welche der Schichtdicke der späteren Festkörpergelenke entspricht, eine Schicht aus Siliziumoxid und Siliziumnitrid enthalten. Es hat sich gezeigt, dass sich durch Nassätzverfahren Festkörpergelenke in einem Siliziumwafer herstellen lassen, die eine einheitliche Dicke haben und von Übergangsbereichen eingefasst sind, die in abgedeckte Bereiche des Siliziumwafers übergehen, z.B. im Übergangsbereich in einem Winkel von 54,7° im Falle der nasschemischen Ätzung von (100) orientierten Siliziumwafern. Die Wandelemente haben, z.B. zwischen den Zwischenstücken mit Ausnahme der Festkörpergelenke und der angrenzenden Übergangsbereiche, eine Dicke von z.B. 360 µm. Damit die Wandelemente nur an ihren Festkörpergelenken schwenkbar sind, ist bevorzugt, dass die Wandelemente eine Biegesteifigkeit aufweisen, die zumindest um den Faktor 3, bevorzugt um den Faktor 5 oder den Faktor 10 höher, bevorzugter mindestens Faktor 100 höher ist als die Biegesteifigkeit der Festkörpergelenke

Die Biegesteifigkeit jedes Wandelements in 90° zur Ebene des Festkörpergelenks, z.B. bei Belastung in Richtung auf eine Schmalseite, ist bevorzugt um mindestens den Faktor 100, bevorzugt zumindest 300 höher als die Biegesteifigkeit des Festkörpergelenks oder des Wandelements.

Die Festkörpergelenke erstrecken sich in den Wandelementen zwischen den Übergangsbereichen entlang der Längserstreckung der Wandelemente nur in einem Ausmaß, dass die Festkörpergelenke nicht knicken. Z.B. erstrecken sich die Festkörpergelenke entlang der Längserstreckung der Wandelemente in einem Ausmaß von 0,25 bis 0,45 mm.

Die Dicke der Festkörpergelenke kann durch die Dauer des Abtragens eingestellt werden oder dadurch, dass in dem Siliziumwafer eine vergrabene SiO₂-Schicht (benutzt als Stopp-Schicht) in einem Abstand zur Oberfläche liegt, welche der Dicke der Festkörpergelenke entspricht, die z.B. als SOI-Wafer erhältlich sind.

Die Wandelemente haben z.B. einen rechteckigen Querschnitt, so dass die Breite der Wandelemente eine hohe Steifigkeit gegen Kräfte aufweist, die in der Ebene der Wandelemente wirken, z.B. in 90° zur Ebene des Festkörpergelenks.

Die in die Festkörpergelenke integrierten piezoresistiven Widerstände erzeugen zusammen mit den in einem Abstand parallel an Zwischenstücken verbundenen Wandelementen ein lineares Messsignal über einen großen Auslenkungsbereich.

Erfindungsgemäß ist in zumindest einem Festkörpergelenk zumindest eines Wandelements jedes Kraftsensors zumindest ein piezoresistiver Widerstand integriert. Bevorzugt sind in den beiden Festkörpergelenken zumindest eines Wandelements jedes Kraftsensors jeweils zwei piezoresistive Widerstände integriert. In einer Ausführungsform weist in jedem Kraftsensor zumindest ein Wandelement, optional genau ein Wandelement, in zumindest einem Festkörpergelenk einen integrierten Widerstand auf, optional genau einen piezoresistiven Widerstand. Eine mechanische Änderung der Festkörpergelenke ergibt eine Änderung des aus der anliegenden Speisespannung erzeugten Messsignals der piezoresistiven Widerstände. In der Ausführungsform mit jeweils zwei piezoresistiven Widerständen in jedem der beiden Festkörpergelenke eines Wandelements sind die vier piezoresistiven Widerstände bevorzugt so miteinander kontaktiert, sodass sie eine Wheatstone-Brücke bilden.

Die piezoresistiven Widerstände können z.B. durch Dotierung des Siliziumwafers mit Bor und/oder Phosphor, bevorzugt mit Bor, im Bereich der Festkörpergelenke hergestellt werden und anschließend elektrisch kontaktiert werden.

Die piezoresistiven Widerstände können gestreckte Bereiche sein, die sich parallel oder senkrecht zur Längserstreckung der Wandelemente erstrecken.

Zur Kontaktierung der piezoresistiven Widerstände weist das Wandelement Leiterbahnen auf z.B. aus Aluminium, die an zumindest einem Ende des Wandelements, bevorzugt an beiden Enden des Wandelements, in Anschlussflächen, bevorzugt aus Kupfer, münden. An die Anschlussflächen sind Leitungen angeschlossen, z.B. angelötet. Die Anschlussflächen zur Kontaktierung und die Leiterbahnen können auf der ersten Oberfläche des Wandelements angeordnet sein, die gegenüber der zweiten Oberfläche ist, die Ausnehmungen aufweist, um die Festkörpergelenke zu bilden. Bevorzugt sind Leiterbahnen auf der ersten Seite des ersten Wandelements, um die piezoresistiven Widerstände zu kontaktieren. Generell bevorzugt sind Anschlussflächen (Kontaktpads) von Leiterbahnen der Wandelemente in dem Bereich angeordnet, in dem die Zwischenstücke angeordnet sind. Die Metallschichten der Anschlussflächen können z.B. aufgesputtert und anschließend aufgalvanisiert sein.

Optional weist ein erstes der Wandelemente eines Kraftsensors die piezoresistiven Widerstände auf und ein zweites Wandelement weist keine piezoresistiven Widerstände auf, oder beide Wandelemente eines Kraftsensors weisen piezoresistive Widerstände auf und sind z.B. gleich. Weiter bevorzugt weist das erste und/oder das zweite Wandelement entlang der Längserstreckung verlaufende, durchgehende vier, bevorzugt acht Leiterbahnen auf, an deren Enden Anschlussflächen angebracht sind. Die durchgehenden Leiterbahnen sind bevorzugt mit den Anschlussflächen für die piezoresistiven Widerstände eines der anderen Kraftsensoren elektrisch verbunden, so dass die durchgehenden Leiterbahnen die elektrische Kontaktierung eines oder zweier weiterer Kraftsensoren ohne zusätzliche externe Leitungen erlauben. Durchgehende Leiterbahnen an einem ersten Wandelement sind bevorzugt, um eine Speisespannung durchzuleiten, z.B. zum Anschluss an die piezoresistiven Widerstände eines weiteren bzw. eines angrenzenden Kraftsensors. Solche an einem Wandelement angeordneten durchgehenden Leiterbahnen haben gegenüber Metalldrähten oder Flexkabelverbindungen den Vorteil, dass kein zusätzliches mechanisches Moment auf die Kraftsensoren übertragen wird.

Bevorzugt sind die zumindest zwei Kraftsensoren des Mikrotasters entlang einer gemeinsamen Symmetrieachse angeordnet. Bei drei Kraftsensoren sind ein erster und ein zweiter Kraftsensor miteinander verbunden und so entlang einer Symmetrieachse angeordnet, dass ihre Wandelemente mit ihrer Längserstreckung parallel zu der Symmetrieachse angeordnet sind. Ein dritter Kraftsensor ist mit seinen Wandelementen senkrecht zur Symmetrieachse angeordnet und der zweite Kraftsensor ist an einem Ende, insbesondere an einem Zwischenstück, an einem Verbindungsstück befestigt, das mit dem Ende des dritten Kraftsensors, insbesondere einem Zwischenstück des dritten Kraftsensors, starr verbunden ist.

Bevorzugt weisen Verbindungsstücke Ausnehmungen auf, in die passend Vorsprünge der Zwischenstücke angeordnet werden können und damit verbunden werden können, z.B. durch Kleben oder Löten. Die Vorsprünge der Zwischenstücke können z.B. über die Enden der Wandelemente ragen. Solche Ausnehmungen der Verbindungsstücke und passende Vorsprünge der Zwischenstücke z.B. ein 45° Winkel bilden eine präzise und kostengünstige Hilfe beim Positionieren und Verbinden der Verbindungsstücke mit den Kaftsensoren. Weiter optional weisen die Verbindungsstücke Ausnehmungen auf, deren Wände in dem Abstand der Außenflächen eines Kraftsensors liegen, so dass die Ausnehmungen zur Positionierung, bevorzugt zur formschlüssigen Aufnahme der endständigen Abschnitte des Kraftsensors eingerichtet sind. Generell bevorzugt sind die Zwischen- und Verbindungsstücke aus Silizium, Glas oder Keramik.

Die Verbindungsstücke weisen bevorzugt 4, 8 oder 16 Leitungen auf, die sich zwischen gegenüberliegenden Seiten des Verbindungsstücks erstrecken, bevorzugt mit Anschlussflächen auf den gegenüberliegenden Seiten. Diese Leitungen sind mit den Leiterbahnen der an dem Verbindungsstück angebrachten Wandelemente elektrisch verbunden, z.B. sind die Anschlussflächen des Verbindungsstücks und die Anschlussflächen der Wandelemente mittels Drähten oder Lötzinn aneinander angeschlossen. Die Leitungen der Verbindungsstücke können in Bohrungen durch die Verbindungsstücke oder entlang der Kantenfläche der Verbindungsstücke auf die gegenüberliegende Seite geführt werden.

Das bevorzugte Herstellungsverfahren für die Mikrotaster stellt zunächst die beiden Wandelemente aus einem ersten und einem zweiten Siliziumwafer her. Anschließend werden die beiden Wandelemente zusammen mit einem Zwischenstück verbunden Die Zwischenstücke können separat hergestellt werden, z.B. in einem dritten Siliziumwafer. Der erste und der zweite Siliziumwafer, ggf. dazwischen der dritte Siliziumwafer, werden übereinander angeordnet und mittels der Zwischenstücke miteinander verbunden, so dass die Festkörpergelenke des ersten und zweiten Siliziumwafers parallel und deckungsgleich angeordnet sind. Dann werden die Siliziumwafer in Wandelemente vereinzelt, z.B. durch Sägen, Laserschneiden und/oder andere Trennverfahren, um einzelne Kraftsensoren zu erhalten, von denen anschließend zumindest von einem die piezoresistiven Widerstände elektrisch mit einem Messgerät kontaktiert werden. Bevorzugt werden zwei oder drei Kraftsensoren orthogonal miteinander zu einem Mikrotaster verbunden, wobei bevorzugt die Kraftsensoren jeweils endständig, z.B. an den Enden der Wandelemente und/oder an den Zwischenstücken, mit einem Verbindungsstück verbunden werden. Bevorzugt wird eines der Enden eines Kraftsensors, insbesondere das Ende des Kraftsensors, das einem Taststift gegenüberliegt, mittels eines Verbindungsstücks mit dem Arm eines Koordinatenmessgeräts verbunden.

Bevorzugt werden vor dem Vereinzeln in Kraftsensoren deren Konturen durch Trockenätzen und/oder Laserschneiden vorgeschnitten, insbesondere entlang der Festkörpergelenke. Dieses Vorschneiden dient insbesondere dazu, den Festkörpergelenken präzise Kanten zu geben, die bevorzugt parallel zur Längserstreckung des Wandelements verlaufen. Überdies wird auch der Bruch oder die Rissbildung in der Festkörpergelenken vermieden, die beim Trennen auftreten können.

Das Verfahren weist die folgenden Schritte auf:
a. Das Erzeugen von piezoresistiven Widerständen auf einer ersten Oberfläche eines ersten Siliziumwafers jeweils paarweise in beabstandeten parallelen ersten Bereichen. Danach ein Ätzen, auf der gegenüberliegenden zweiten Oberfläche des Siliziumwafers bis nur in den parallelen Bereichen gegenüber den piezoresistiven Widerständen Silizium entfernt ist, um dort einstückig ausgebildete Festkörpergelenke zu erzeugen. Es folgt das Kontaktieren der piezoresistiven Widerstände mit Leiterbahnen, die sich bis zu einem Bereich erstrecken, in dem später Zwischenstücke angebracht werden,
b. Das Ätzen auf einer der ersten Oberfläche gegenüberliegenden zweiten Oberfläche eines zweiten Siliziumwafers nur in Bereichen, die sich gleich den ersten Bereichen erstrecken und angeordnet sind, um einstückig ausgebildete zweite Festkörpergelenke zu erzeugen,
c. Bereitstellen und Anordnen von Zwischenstücken an dem ersten Siliziumwafer und dem zweiten Siliziumwafer,
d. Verbinden des ersten Siliziumwafers und des zweiten Siliziumwafers durch die Zwischenstücke,
e. Vereinzelung des ersten Siliziumwafers und des zweiten Siliziumwafers in Wandelemente, die jeweils zwei erste Bereiche umfassen, die zwischen zwei Zwischenstücken angeordnet sind, um Kraftsensoren herzustellen und
f. Verbinden von zumindest zwei Kraftsensoren orthogonal zueinander.

Schritt c. kann als Teil von Schritt a. oder Schritt b., vor diesen oder nach diesen durchgeführt werden. Die Zwischenstücke können in Schritt c. an dem ersten und/oder dem zweiten Siliziumwafer durch Formen der Zwischenstücke aus dem ersten und/oder aus dem zweiten Siliziumwafer bereitgestellt und angeordnet werden, z.B. mittels Ätzverfahren, so dass die Zwischenstücke als Erhebungen einstückig auf dem ersten und/oder auf dem zweiten Siliziumwafer erzeugt werden.

Generell können die Zwischenstücke auf der ersten Oberfläche, bevorzugt auf der zweiten Oberfläche des ersten Siliziumwafers und/oder auf der ersten Oberfläche, bevorzugt auf der zweiten Oberfläche des zweiten Siliziumwafers angeordnet werden.

Wenn die Zwischenstücke einstückig auf der zweiten Oberfläche des ersten und/oder des zweiten Wandelements erzeugt werden, ist bevorzugt, dass die Leiterbahnen und Anschlussflächen auf der jeweils gegenüberliegenden ersten Oberfläche angeordnet sind.

Alternativ können die Zwischenstücke aus einem dritten Siliziumwafer hergestellt werden, der zwischen dem ersten und zweiten Siliziumwafer angeordnet und ausgerichtet wird, so dass beim Trennen in Schritt e. auch die Zwischenstücke aus dem dritten Siliziumwafer getrennt werden.

Die Leiterbahnen, die die piezoresistiven Widerstände kontaktieren, können auf der ersten Oberfläche oder der zweiten Oberfläche des ersten Siliziumwafers hergestellt werden, z.B. durch Aufbringen von Metall, z.B. Aluminium mittels Kathodenzerstäubung (Sputtern).

Das Verbinden in Schritt d. kann durch Auftragen von Klebstoff, z.B. mittels Übertragen einer Klebstoffschicht von einer Folie, auf die Zwischenstücke mit anschließendem Ausrichten und Zusammendrücken des ersten Siliziumwafers und des zweiten Siliziumwafers erfolgen. Alternativ kann das Verbinden in Schritt d. durch eine Verbindungstechnik wie z.B. anodisches, eutektisches oder direktes Fügen erfolgen.

Es hat sich gezeigt, dass das Herstellungsverfahren geeignet ist, um eine Vielzahl von gleichen Kraftsensoren herzustellen.

Optional werden auch Verbindungsstücke aus einem Silizium-, Glas- oder Keramikwafer hergestellt, z.B. mit den Schritten
- Herstellen von Bohrungen, z.B. durch Laserverfahren oder Trockenätzen,
- Herstellen der Leiterbahnen mit Anschlussflächen, z.B. durch Sputtern und/oder galvanisches Auftragen,
- bevorzugt Herstellen von Ausnehmungen für das Verbinden mit einem Kraftsensor, z.B. durch Trockenätzen oder mittels Laserabtrag oder Schleifen,
- Vereinzeln der Verbindungsstücke, z.B. durch Sägen

Verbindungsstücke können alternativ aus gesinterter Keramik, z.B. Niedertemperatur-Einbrand-Keramik (LTCC) hergestellt sein.

Der Mikrotaster wird im Bereich eines der endständigen Kraftsensoren, insbesondere an genau einem endständigen Bereich eines Kraftsensors, bevorzugt an dessen genau einem Zwischenstück, befestigt, z.B. an einem bewegten Arm eines Koordinatenmessgeräts. Bevorzugt ist der endständige Bereich des Kraftsensors, der an einem Arm festgelegt ist, an einem Verbindungsstück festgelegt, das an dem Arm befestigt ist. An dem gegenüberliegenden Ende des Mikrotasters kann ein Taststift angebracht sein, bevorzugt am freien endständigen Bereich des Kraftsensors, insbesondere an dessen freiem Zwischenstück, der dem festgelegten Ende gegenüberliegt.

Die Erfindung wird nun genauer mit Bezug auf die Figuren beschrieben, die schematisch in
- Figur 1 einen Mikrotaster mit drei mittels Verbindungsstücke verbundenen Kraftsensoren,
- Figur 2 einen Kraftsensor in Aufsicht auf ein Wandelement und um 90° gedreht, ohne Darstellung von Leiterbahnen und Anschlussflächen,
- Figur 3 ein Herstellungsverfahren,
- Figur 4 mögliche Leiterbahnen auf einem Wandelement,
- Figur 5 einen Mikrotaster mit einer Ausführungsform zur Kontaktierung,
- Figur 6 einen Mikrotaster mit einer bevorzugten Ausführungsform zur Kontaktierung,
- Figur 7 einen Mikrotaster mit einer bevorzugten Ausführungsform zur Kontaktierung,
- Figur 8 ein Kraft-Weg-Diagramm für die drei Raumrichtungen, das mit einem erfindungsgemäß hergestellten Kraftsensor aufgenommen wurde,
- Figur 9 Spannung-Weg-Diagramme, die mit erfindungsgemäßen Mikrotastern mit unterschiedlicher Orientierung der piezoresistiven Widerständeaufgenommen wurden,
- Figur 10 ein Kraft-Weg-Diagramm für die drei Raumrichtungen, das mit einem Mikrotaster aus zwei erfindungsgemäß hergestellten Kraftsensoren aufgenommen wurde, a) mit und b) ohne Taststift, und in
- Figur 11 ein Schaltplan für drei jeweils zueinander senkrecht angeordnete Kraftsensoren, die einen Mikrotaster bilden.

In den Figuren bezeichnen gleiche Bezugsziffern funktionsgleiche Teile.

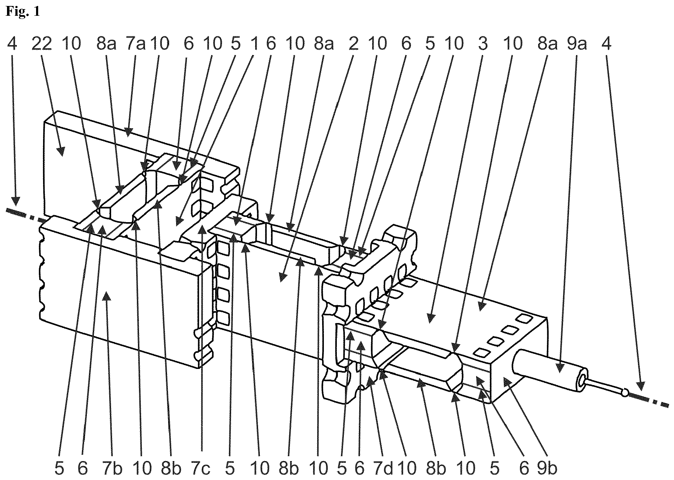

Die Figur 1 zeigt einen erfindungsgemäßen Mikrotaster aus drei orthogonal zueinander in Reihe angeordneten Kraftsensoren 1, 2, 3, die entlang einer gemeinsamen Achse 4 angeordnet sind und jeweils nur im Bereich ihrer Enden 5 miteinander verbunden sind. Ein endständiger Kraftsensor 1 ist an genau einem Ende 5 festgelegt, z.B. an der Oberfläche 22 eines Verbindungsstücks 7, bevorzugt im Bereich seines Zwischenstücks 6 gegenüber dem Verbindungsstück 7 zum angrenzenden Kraftsensor 2. Die Zwischenstücke 6 sind jeweils zwischen den Enden 5 angeordnet, die sich an der Längserstreckung der Wandelemente 8a, 8b befinden. Das dem angrenzenden Kraftsensor 2 gegenüberliegende freie Ende 5 des endständigen Kraftsensors 3 bildet den Angriffspunkt für die zu messende Kraft, an dem ein Taststift 9a an der endständigen Stirnfläche (9b) des Zwischenstücks 6 angebracht ist.

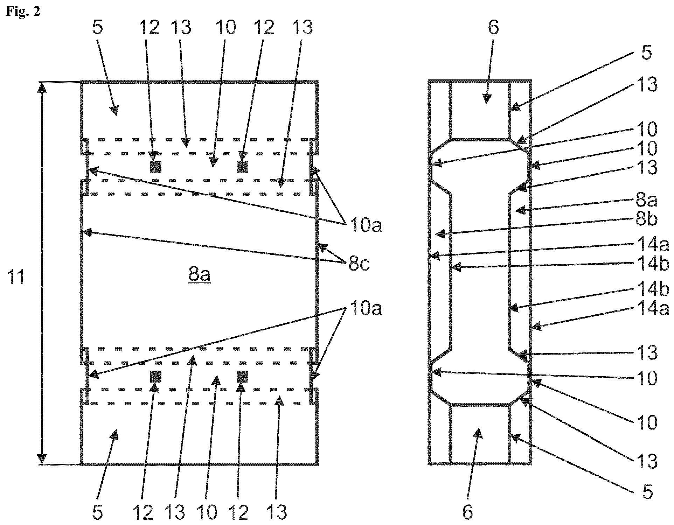

Die Figur 2 zeigt einen einzelnen Kraftsensor 1 in Aufsicht auf dessen Wandelement 8a und um 90° gedreht. Jedes Wandelement 8a, 8b weist deckungsgleich zwei Festkörpergelenke 10 auf, die senkrecht zur Längserstreckung 11 zwischen den Enden 5 angeordnet sind. Die Zwischenstücke 6, hier als separat hergestellte Teile gezeigt, die mit den Wandelementen 8a, 8b verbunden sind, sind an den Enden 5 zwischen den Wandelementen 8a, 8b angeordnet und mit diesen verbunden. Die Festkörpergelenke 10 sind als einstückige Bereiche der Wandelemente 8a, 8b mit geringerer Dicke ausgebildet und angrenzend an die Zwischenstücke 6 angeordnet. Zumindest ein Wandelement 8a weist in seine Festkörpergelenke 10 integriert ausgebildete piezoresistive Widerstände 12 auf. Der Kraftsensor kann z.B. Wandelemente 8a, 8b einer Längserstreckung 11 von 2 bis 7 mm, z.B. 6,5 mm, aufweisen, mit einer Breite, über die sich die Festkörpergelenke 10 erstrecken, z.B. von 3 bis 6 mm, z.B. 4 mm, wobei die Festkörpergelenke 10 in einem Abstand von z.B. 3 bis 4 mm zwischen den Zwischenstücken 6 angeordnet sind. Die Festkörpergelenke 10 können zwischen den Übergangsbereichen 13 bevorzugt eine Dicke von 10 bis 50 µm aufweisen und eine Länge zwischen den Übergangsbereichen 13 in Längserstreckung 11 der Wandelemente 8a, 8b von ca. 0,1 bis 0,5 mm. Hier sind die Festkörpergelenke 10 der beabstandeten Wandelemente 8a, 8b in einem Abstand von 1,72 mm angeordnet. Generell bevorzugt sind die Festkörpergelenke der voneinander beabstandeten Wandelemente in einem Abstand angeordnet, der 40 bis 60%, bevorzugt etwa 50% des Abstands entspricht, in dem die Festkörpergelenke eines Wandelements angeordnet sind. Durch das bevorzugte Herstellungsverfahren der Festkörpergelenke 10 durch Ätzen eines Siliziumwafers ergeben sich Übergangsbereiche 13 von ca. 54.7° zwischen der abgedeckten zweiten Oberfläche 14b eines Siliziumwafers und dem Festkörpergelenk 10, das zwischen den Übergangsbereichen 13 eine gleichmäßige Dicke aufweist. In der ersten Oberfläche 14a, die der zweiten Oberfläche 14b gegenüberliegt, sind die piezoresistiven Widerstände 12 erzeugt, die in den Festkörpergelenken 10 angeordnet sind. Die Figur 2 zeigt auch, dass gemäß der bevorzugten Ausführungsform die Wandelemente 8a, 8b zumindest in dem Bereich der Festkörpergelenke 10 vorgeschnitten sind, z.B. durch Trockenätzen oder mittels Laserstrahl, um reproduzierbare Kanten 10a an den Festkörpergelenken 10 zu erzeugen und Rissbildung beim Sägen zur Vereinzelung der Wandelemente 10 zu vermeiden. Generell können die geschnittenen Kanten 10a der Festkörpergelenke 10 von der Kante 8c der angrenzenden Wandelemente 10 zurückversetzt sein.

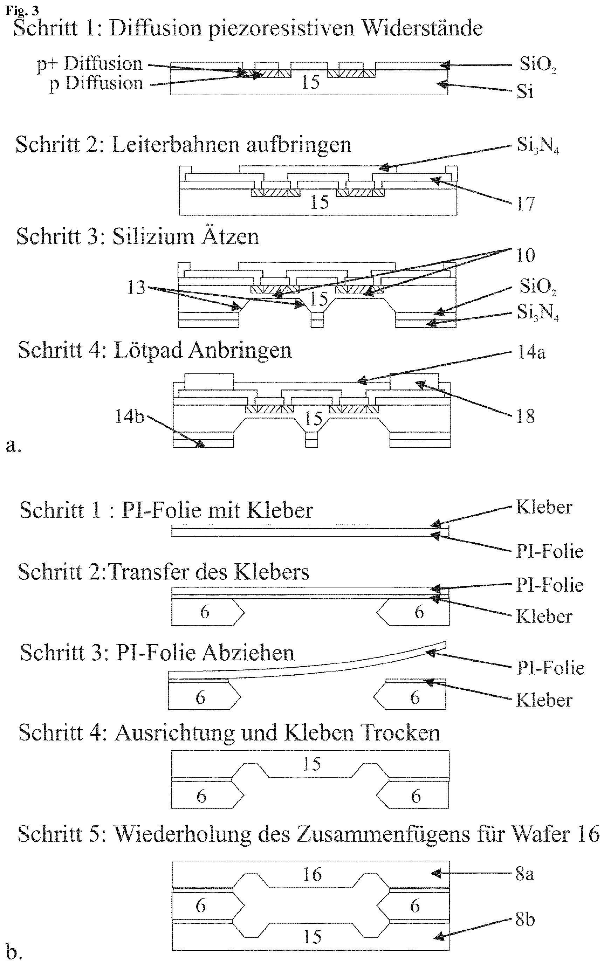

In Figur 3 ist schematisch ein bevorzugtes Herstellungsverfahren gezeigt, bei dem in einem 1. Schritt die ersten Wandelemente 8a bzw. die zweiten Wandelemente 8b auf jeweils einem ersten Siliziumwafer 15 bzw. einem zweiten Siliziumwafer 16 hergestellt werden. Für die Erzeugung piezoresistiver Widerstände 12 wird Silizium-Oxid (SiO₂) auf die erste Oberfläche 14a eines ersten Siliziumwafers 15 aufgetragen, wobei Bereiche freigelassen werden, in denen die piezoresistiven Widerstände 12 erzeugt werden, indem Boratome durch diese freigelassenen Bereiche eindiffundieren, bevorzugt zweistufig eindiffundieren, um eine bessere Kontaktierung mit der metallischen Anschlussfläche zu erzeugen. Dann wird eine Isolierungsschicht aus SiO₂ aufgebracht und Freistellen werden strukturiert, um die folgende Kontaktierung zu ermöglichen.

Anschließend werden in einem 2. Schritt Leiterbahnen 17 auf die erste Oberfläche 14a aufgebracht, z.B. durch Sputtern und anschließende Strukturierung durch Nassätzen, die die piezoresistiven Widerstände kontaktieren und an einem Ende 5 oder an beiden gegenüberliegenden Enden 5 des Wandelements 8a enden.

Die erste Oberfläche 14a des ersten Siliziumwafers 15 wird mit Si₃N₄ als Schutzschicht abgedeckt, um nur die Bereiche freizulassen, in denen die Anschlussflächen 18 aufgebracht werden sollen.

Die zweite Oberfläche 14b, die der ersten Oberfläche 14a des ersten Siliziumwafers 15 gegenüberliegt, wird in einem 3. Schritt mit SiO₂ und Si₃N₄ abgedeckt, um nur die Bereiche freizulassen, in denen die Festkörpergelenke 10 und deren Übergangsbereiche 13 gebildet werden sollen, mit anschließendem Nassätzen für eine Zeit, die zum Abtragen des ersten Siliziumwafers 15 bis auf die gewünschte Dicke der Festkörpergelenke 10 ausreicht.

In einem anschließenden 4. Schritt werden an den Leiterbahnen 17 an zumindest einem Ende 5 jedes Wandelements 8a Anschlussflächen 18 (Kontaktpads) angebracht.

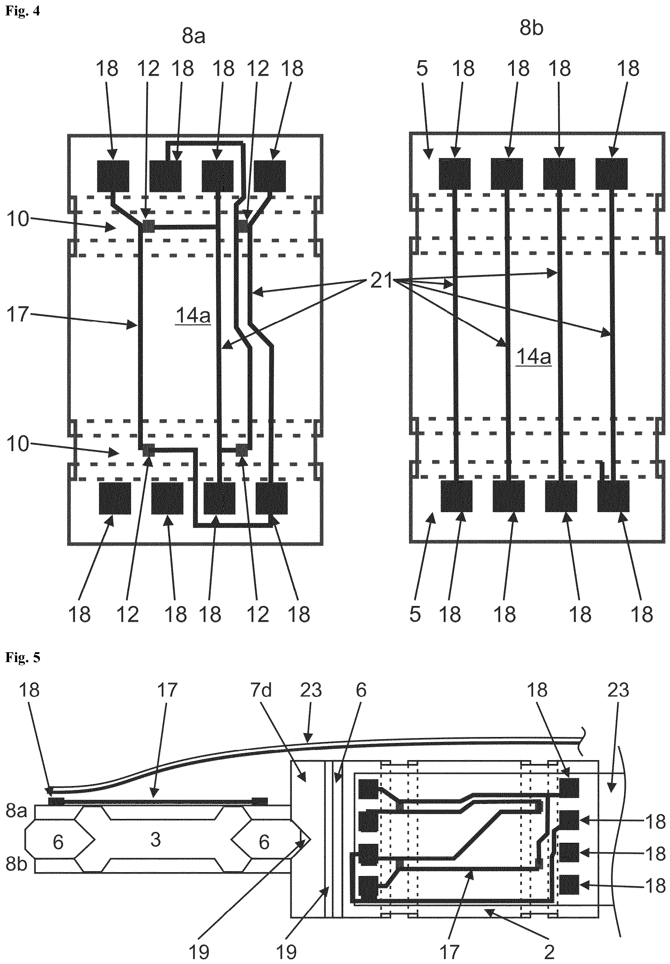

Diese Verfahrensschritte können identisch mit einem zweiten Siliziumwafer 16 durchgeführt werden, oder ohne den 1. Schritt zur Erzeugung und elektrischen Kontaktierung der piezoresistiven Widerstände 12. Bevorzugt werden auf den Wandelementen 8b des zweiten Siliziumwafers durchgehende Leiterbahnen (in Fig. 4 gezeigt) hergestellt, die jeweils endständig Anschlussflächen 18 aufweisen.

Zwischenstücke 6 können als Bestandteile eines dritten Siliziumwafers hergestellt werden, wobei sie in einer Anordnung in diesem Siliziumwafer gehalten werden, in der sie an den Enden 5 der ersten und zweiten Wandelemente 8a, 8b liegen, so wie die Wandelemente 8a, 8b auf dem ersten und zweiten Siliziumwafer 15, 16 angeordnet sind. Wenn die Zwischenstücke 6 aus Silizium sind, können sie durch Nassätzen aus einem dritten Siliziumwafer hergestellt werden, nachdem die nicht zu ätzenden Bereiche mit Schichten aus Siliziumoxid SiO₂ und Siliziumnitrid Si₃N₄ abgedeckt sind. Nach Auftragen von Klebstoff auf die Flächen der Zwischenstücke 6, die mit den Enden 5 der Wandelemente 8a, 8b verbunden werden, z.B. mittels Übertragung einer Klebstoffschicht von einer Polyimidfolie (PI-Folie mit Kleber), werden der erste und der zweite Siliziumwafer 15, 16 und dazwischen der dritte Siliziumwafer übereinander positioniert, so dass die Enden 5 der Wandelemente 8a, 8b jeweils an gegenüberliegenden Flächen der Zwischenstücke 6 liegen, und zusammengeführt, optional in einzelnen Schritten mit zwischenzeitlichem Härten des Klebers. Zur Vereinzelung werden die Siliziumwafer gesägt, wobei bevorzugt vor dem Sägen ein Ätzschritt entlang des Umfangs der Wandelemente 8a, 8b, zumindest im Bereich der Festkörpergelenke 10, erfolgt, bevorzugt ein Trockenätzschritt, der ausreicht, die Festkörpergelenke 10 entlang der Kanten 10a der Festkörpergelenke 10 zu durchtrennen. Dieser Ätzschritt erzeugt zumindest im Bereich der Festkörpergelenke 10 glattere Kanten 10a, die eine höhere Haltbarkeit bzw. Stabilität aufweisen als unregelmäßige gesägte Kanten.

Die Figur 4 zeigt eine Anordnung von Leiterbahnen 17 und Anschlussflächen 18, die auf der ersten Oberfläche 14a der ersten Wandelemente 8a (linkes Bild) die piezoresistiven Widerstände 12 elektrisch kontaktieren und mit durchgehenden Leiterbahnen für die Speisespannung 21. Die piezoresistiven Widerstände 12 sind bevorzugt innerhalb eines Wandelements gleich ausgerichtet und können senkrecht oder parallel zur Längserstreckung 11 angeordnet sein. Dazu zeigt die Figur 4 eine Anordnung von durchgehenden Leiterbahnen 21 und Anschlussflächen 18, die auf der ersten Oberfläche 14a des zweiten Wandelements 8b (rechtes Bild) angebracht sind.

Die Figuren 5 bis 6 zeigen Verbindungen der Kraftsensoren 1, 2 und die elektrische Kontaktierung der piezoresistiven Widerstände 12.

In Figur 5 sind die am Ende 5 angeordneten Anschlussflächen 18, die mittels Leiterbahnen 17 mit den piezoresistiven Widerständen 12 in den Festkörpergelenken 10 elektrisch verbunden sind, jeweils durch Polyimidfolien 23 mit durchgehenden Kupferleiterbahnen verbunden. Da solche Polyimidfolien (6µm Dicke) mit Kupferleiterbahnen (2µm Dicke) eine geringe Federwirkung haben, ist diese Kontaktierung z.B. zu einer Maschine, einem Koordinatenmessgerät oder einem elektrischen Messgerät praktisch ohne zusätzliche mechanisch störende Momente möglich. Zur Verbindung der Kraftsensoren 1, 2 ragt das Zwischenstück 6 des ersten Kraftsensors 1 über die Wandelemente 8a, 8b dieses Kraftsensors hinaus und in eine passende Ausnehmung 19 in einem Verbindungsstück 7d. An dem Verbindungsstück 7d gegenüber dem ersten Kraftsensor 1 ist ein zweiter Kraftsensor 2 mit seinem Zwischenstück befestigt, das zwischen seinen Wandelementen 8a, 8b angeordnet ist. Das Zwischenstück 6, das über die Wandelemente 8a, 8b hinausragt, bildet mit der Ausnehmung 19 eine Positionierhilfe und Verbindung mit dem Verbindungsstück 7d, insbesondere, wenn die Kantenflächen der Wandelemente 8a, 8b neben der Ausnehmung 19 auf dem Verbindungsstück aufliegen und bevorzugt mit diesem verbunden sind. Die Ausnehmung 19 des Verbindungsstücks und der hinausragende Teil des Zwischenstücks weisen Winkel von ca. 45° auf, wenn sie durch Ätzen aus Silizium hergestellt sind, so dass durch ein Ätzverfahren zueinander passende Formen für die Ausnehmung 19 und das Zwischenstück 6 hergestellt werden können.

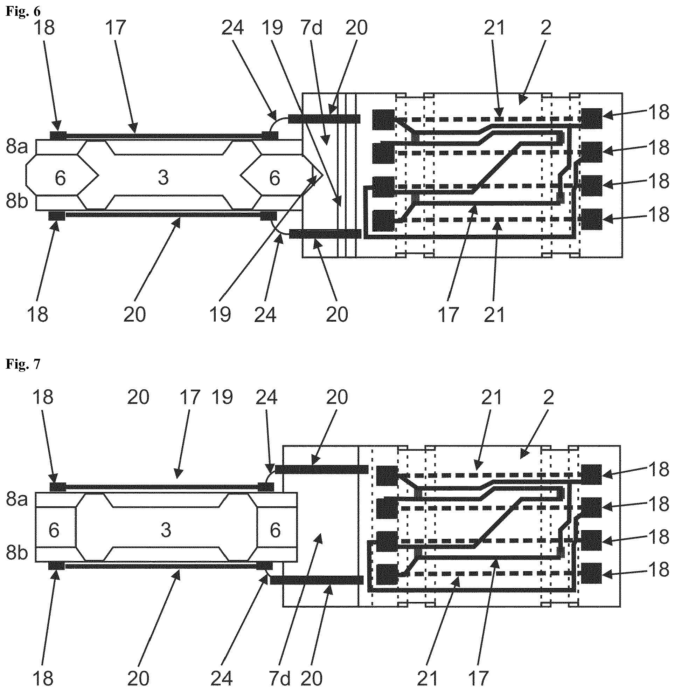

Eine bevorzugte elektrische Kontaktierung ist in Figur 6 gezeigt, bei der das Verbindungsstück 7d durchgehende Leitungen 20 aufweist, die gegenüberliegende Oberflächen des Verbindungsstücks 7d verbinden und dort jeweils Anschlussflächen (Kontaktpads) aufweisen. Die durchgehenden Leitungen 20 können auf der Außenfläche des Verbindungsstücks 7d angeordnet sein, bevorzugt sind die durchgehenden Leitungen 20 durch das Verbindungsstück 7d angeordnet, wie in Figuren 6 und 7 gezeigt ist, z.B. in Form einer Durchkontaktierung, ähnlich zur Durchkontaktierung in Leiterplatten. Zur elektrischen Verbindung der Anschlussflächen von piezoelektrischen Widerständen 12 sind die Anschlussflächen der damit verbundenen Leiterbahnen 17 elektrisch mit den durchgehenden Leitungen 20 des an dem Kraftsensor 1 befestigten Verbindungsstücks 7d verbunden. Zur Durchleitung ist bevorzugt, dass das zweite Wandelement 8b eines am Verbindungsstück 7d gegenüberliegend befestigten Kraftsensors 2 durchgehende Leiterbahnen 21 aufweist, die entlang der Längserstreckung des zweiten Wandelements 8b laufen und mit den durchgehenden Leitungen 20 des Verbindungsstücks 7d verbunden sind. In dieser Ausführungsform weist zumindest ein Wandelement 8a, 8b, bevorzugt das zweite Wandelement 8b, das keine piezoresistiven Widerstände in seinen Festkörpergelenken 10 aufweist, zumindest 4, bevorzugt 8 oder 12 von einem Ende 5 zu seinem gegenüberliegenden Ende 5 durchgehende Leiterbahnen 21 auf. Diese Ausführungsform hat den Vorteil, die mechanischen Eigenschaften des Kraftsensors, insbesondere seine Federeigenschaften, nicht wesentlich zu beeinflussen.

Die Fig. 5 zeigt, dass ein Verbindungsstück 7d, z.B. aus Keramik oder Silizium hergestellt, eine Ausnehmung 19 aufweisen kann, die einen Abschnitt des Endes 5 eines Kraftsensors 1 einschließlich der Wandelemente 8a, 8b formschlüssig umfasst, wobei die Stirnflächen der Wandelemente 8a, 8b und des Zwischenstücks 6 auf dem Verbindungsstück 7d aufliegen und z.B. mit diesem verklebt sind.

Die in den nachfolgenden Messungen eingesetzten Kraftsensoren wurden mit dem in Figur 3 dargestellten Verfahren mit Wandelementen 8a, 8b und Zwischenstücken 6 aus Silizium hergestellt. Die Kraftsensoren wiesen die folgenden Abmessungen auf:
Wandelemente: 6,5 mm Längserstreckung, 4 mm Breite, 360 ± 25 µm Dicke,
Festkörpergelenke 3,67 mm Mittenabstand voneinander, 0,33 mm in Längserstreckung des Wandelements in 20 µm Dicke, aus Silizium.

Zwischenstücke: zwischen den Endbereichen der Wandelemente mit 1 mm Dicke, aus Silizium, verklebt.

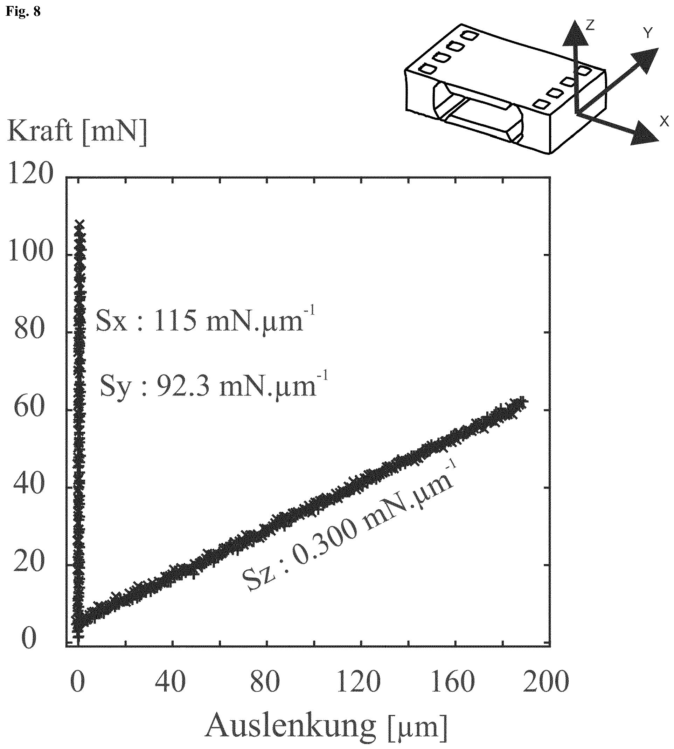

Die Figur 8 zeigt das Kraft-Weg-Diagramm, das mit einem einzelnen Kraftsensor aufgenommen wurde. Die Belastung wurde in X-, Y- und Z-Richtung ausgeübt. Das Diagramm zeigt, dass die Steifigkeit in X- und Y-Richtung etwa um den Faktor 300 größer ist als die Steifigkeit in Z-Richtung. Die Steifigkeit in Z-Richtung lag unterhalb von 0,4 mN/µm.

Für verschiedene Kraftsensoren mit unterschiedlichen Dicken und Längen des Festkörpergelenks wurden die folgenden Steifigkeiten in X-Richtung (Sx), Y-Richtung (Sy) bzw. Z-Richtung (Sz) gemessen:

| Dicke Festkörpergelenk [µm] | 20 | 26 | 20 | 26 | 20 | 26 |
|---|---|---|---|---|---|---|
| Länge Festkörpergelenk [mm] | Sx in [mN/ µm] | | Sy in [mN/ µm] | | Sz in [mN/ µm] | |
| 0,45 | 103,8±6 | 116,3±9 | 79,5±6 | 87,4±11 | 0,18±0 | 0,26±0 |
| 0,35 | 109,5±5 | 108,7±9 | 82,3±10 | 90,3±6 | 0,20±0 | 0,31±0 |
| 0,25 | 105,9±9 | 120,9±19 | 70,2±16 | 90,9±15 | 0,26±0 | 0,38±0 |

Die Auslenkung in Z-Richtung beim Bruch betrug in den Messungen von 388 bis 900 µm. Die folgenden Bruchauslenkungen wurden für verschiedene Kraftsensoren mit unterschiedlichen Dicken und Längen des Festkörpergelenks gemessen:

| Dicke Festkörpergelenk [µm] | 20 | | | 26 | | |
|---|---|---|---|---|---|---|
| Länge Festkörpergelenk [mm] | 0,45 | 0,35 | 0,25 | 0,45 | 0,35 | 0,25 |
| Auslenkung bei Bruch [µm] | 799±103 | 677±67 | 548±57 | 713±65 | 548±65 | 488±100 |

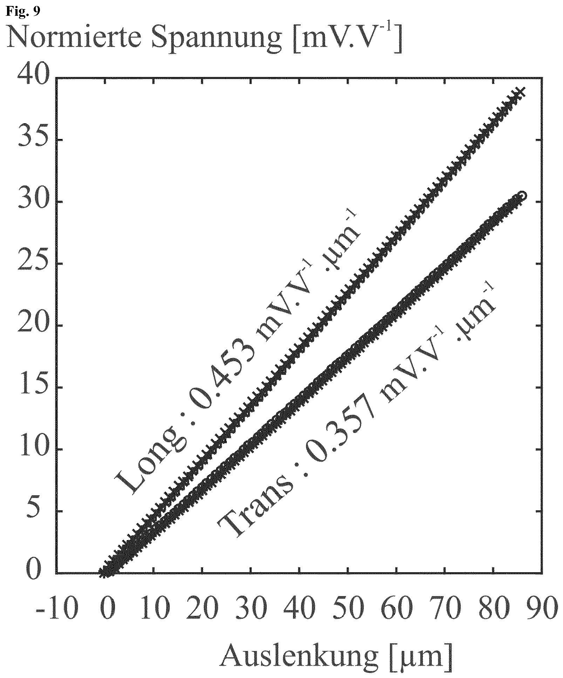

Figur 9 zeigt ein Spannungs-Weg-Diagramm für einzelne Kraftsensoren, einmal mit Anordnung der piezoresistiven Widerstände parallel zur Längserstreckung der Wandelemente 8a, 8b (Long) einmal mit Anordnung der piezoresistiven Widerstände senkrecht zur Längserstreckung der Wandelemente 8a, 8b (Trans). Die Messwerte sind für die erfolgte Auslenkung (hin) und für das Zurückfedern (Rück) in Z-Richtung gezeigt.

Die gemessenen Empfindlichkeiten der einzelnen Kraftsensoren betrugen in mV/V/µm:

| Anordnung der piezoresistiven Widerstände | Long | Trans |
|---|---|---|
| Auslenkung (Hin) | 0,454 mV/V/µm | 0,357 mV/V/µm |
| Zurückfedern (Rück) | -0,454 mV/V/µm | 0,357 mV/V/µm |

Diese Ergebnisse zeigen, dass die Kraftsensoren der erfindungsgemäßen Mikrotaster ein lineares Antwortverhalten aufweisen.

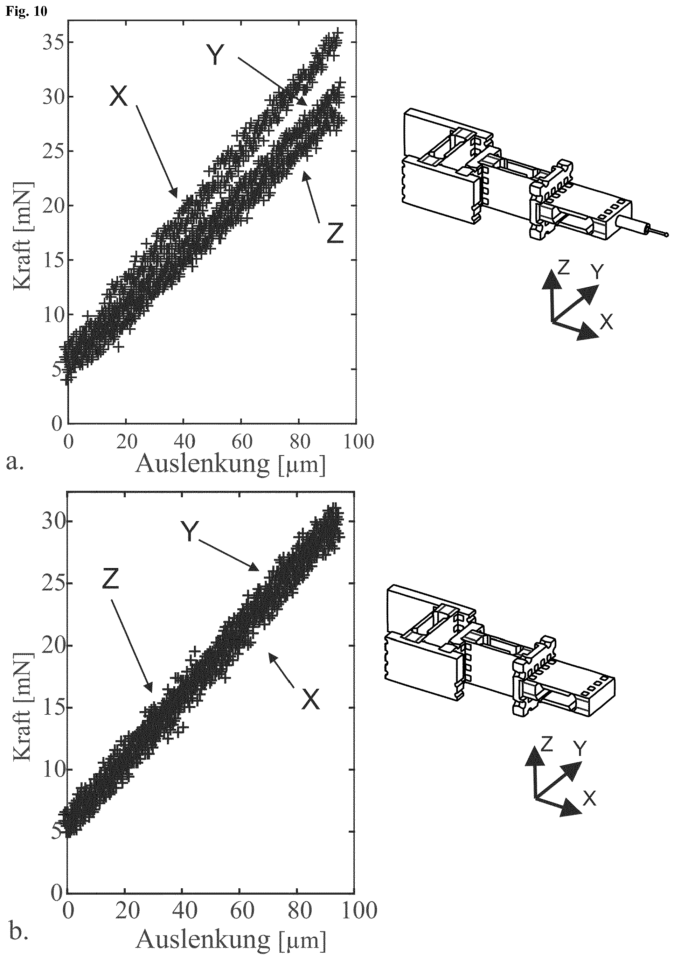

Für einen Mikrotaster entsprechend Figur 1, wurde eine mechanische Anisotropie von 1,06 ohne Taststift gemessen, mit einem endständig am freien Ende 5 des Mikrotasters angebrachten Taststift einer Gesamtlänge von 5 mm. mit einer endständigen Antastkugel mit 100 µm Durchmesser aus Wolframcarbid wurde eine Anisotropie von 1,2 gemessen. Der Taststift besteht aus einem unteren Zylinder mit einem Durchmesser von 1 mm und 3 mm Höhe und daran einem dünnen Stift mit einem Anfangsdurchmesser von 300 µm und Enddurchmesser von 70 µm und 2 mm Höhe. Am Ende des Stiftes ist eine Kugel mit einem Durchmesser von 100 µm angebracht und ein 1,5 mm langer Übergangsbereich, um den Querschnitt zu reduzieren. Die geringere Anisotropie wird auf ein Verbiegen des Taststifts zurückgeführt. Die Messwerte für den Mikrotaster ohne Taststift sind in Fig. 10a dargestellt, für den Mikrotaster mit dem Taststift in Fig. 10b.

Dabei wurden die in der folgenden Tabelle wiedergegebenen Steifigkeiten in X-Richtung (Sx), Y-Richtung (Sy) bzw. Z-Richtung (Sz) gemessen (in N/mm)

| Anordnung der piezoresistiven Widerstände | ohne Taststift | mit Taststift |
|---|---|---|
| Sx | 0,30 | 0,30 |
| Sy | 0,29 | 0,27 |
| Sz | 0,29 | 0,25 |
| Anisotropie Sx/Sz | 1,06 | 1,20 |

Diese Ergebnisse zeigen, dass der erfindungsgemäße Mikrotaster ein isotropes mechanisches Verhalten aufweist z.B. hier über einen Auslenkungsbereich von 90 µm.

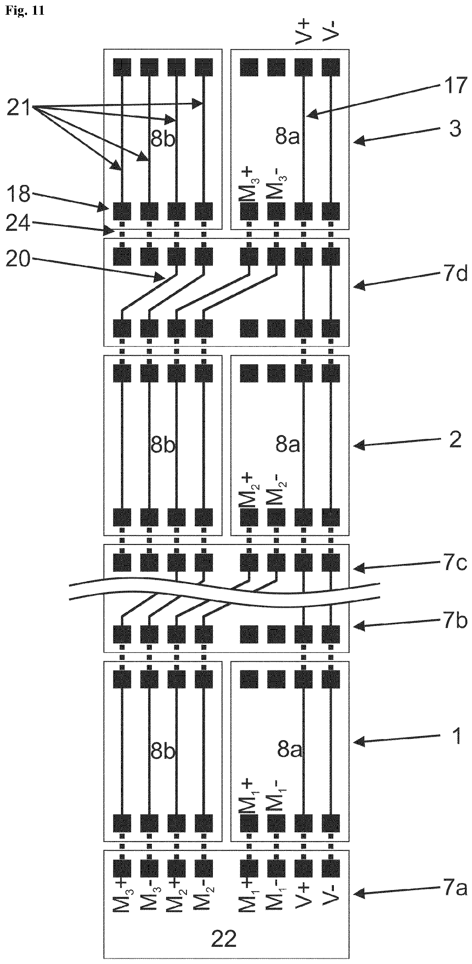

In Figur 11 ist ein beispielhafter Verschaltungsplan des Mikrotasters dargestellt. Für die Leitung von insgesamt 6 Messsignalen der 3 Kraftsensoren 1, 2, 3 (Mi+ und Mi- für i= 1, 2, 3) auf die Fläche 22, an der der Mikrotaster an einem Koordinatenmessgerät angebunden ist, sind jeweils die Versorgungsspannung V+ und V- zu jedem Kraftsensor 1, 2 und 3 zu leiten, um die Wheatstone-Brücke zu versorgen. Die Spannungen, die zu den piezoresistiven Widerständen geleitet werden, werden durch die Leiterbahnen 17 auf einem ersten Wandelement 8a geleitet. Die Spannungen, die entlang eines Kraftsensors zu einem angrenzenden Kraftsensor durchzuleiten sind, werden jeweils durch durchgehende Leiterbahnen 21 an der Oberfläche 14a des zweiten Wandelements 8b des angrenzenden Kraftsensors 2, 3 weitergeleitet und zwischen den Kraftsensoren 1, 2, 3 durch die durchgehenden Leitungen 20 der Verbindungsstücke 7, die zwischen den Kraftsensoren 1, 2, 3 angeordnet sind.

Die Messsignale M3+ und M3- kommen von der ersten Oberfläche 14a des ersten Wandelements 8a des Kraftsensors 3 und werden zur ersten Oberfläche 14a des zweiten Wandelements 8b des Kraftsensors 2 durch die durchgehenden Leitungen 20 des Verbindungsstücks 7d weitergeleitet. Anschließend werden diese Messsignale durch die durchgehenden Leiterbahnen 21 auf der Oberfläche 14a des zweiten Wandelements 8b des Kraftsensors 2 durchgeleitet.

Die Messsignale M2+ und M2- kommen von der ersten Oberfläche 14a des ersten Wandelements 8a des Kraftsensors 2 und die Messsignale M3+ und M3- kommen aus der ersten Oberfläche 14a des zweiten Wandelements 8b des Kraftsensors 2 und werden zur ersten Oberfläche 14a des zweiten Wandelements 8b des Kraftsensors 1 durch die durchgehenden Leitungen 20 des Verbindungsstücks 7c und 7b weitergeleitet. Anschließend werden diese Messsignale durch die durchgehenden Leiterbahnen 21 auf der Oberfläche 14a des zweiten Wandelements 8b des Kraftsensors 1 durchgeleitet.

Die Messsignale M1+ und M1- kommen von der ersten Oberfläche 14a des ersten Wandelements 8a des Kraftsensors 1 und die Messsignale M3+, M3-, M2+ und M2- kommen aus der ersten Oberfläche 14a des zweiten Wandelements 8b des Kraftsensors 1 und werden zur Oberfläche 22 des Verbindungsstücks 7a weitergeleitet.

**Bezugszeichenliste:**

| | |
|---|---|
| 1, 2, 3 Kraftsensor | 14a erste Oberfläche |
| 4 gemeinsame Achse | 14b zweite Oberfläche |
| 5 Ende | 15 erster Siliziumwafer |
| 6 Zwischenstück | 16 zweiter Siliziumwafer |
| 7a, 7b, 7c, 7d, Verbindungsstück | 17 Leiterbahn |
| 8a, 8b Wandelement | 18 Anschlussfläche (Kontaktpad) |
| 8c Kante des Wandelements | 19 Ausnehmung |
| 9a Taststift | 20 durchgehende Leitung |
| 9bTaststift-Anbindungsfläche | 21 durchgehende Leiterbahn |
| 10 Festkörpergelenk | 22 Festlegungsstelle |
| 10a geschnittene Kante des | 23 Polyimidfolie mit durchgehenden Leiterbahnen |
| Festkörpergelenks | |
| 11 Längserstreckung | 24 elektrische Kontaktierung (z.B. Lötzinn) |
| 12 piezoresistiver Widerstand | |
| 13 Übergangsbereich | |

## Patentansprüche

1. Mikrotaster mit zumindest einem Kraftsensor (1, 2, 3) und einem weiteren Kraftsensor (1,2,3), wobei jeder Kraftsensor (1, 2, 3) zwei zueinander parallele Wandelemente (8a, 8b) aufweist, die in einem Abstand zueinander durch Zwischenstücke (6) verbunden sind, die an den Enden (5) der Wandelemente (8a, 8b) festgelegt sind, wobei jedes Wandelement (8a, 8b) zwei beabstandete und senkrecht zu seiner Längserstreckung (11) angeordnete und zueinander parallele, einstückig in dem Wandelement (8a, 8b) ausgebildete Festkörpergelenke (10) aufweist, wobei die Wandelemente (8a, 8b) nur an den Festkörpergelenken (10) und parallel zueinander schwenkbar sind und zumindest eines der Wandelemente (8a, 8b) in zumindest einem Festkörpergelenk (10) zumindest einen integrierten piezoresistiven elektrischen Widerstand (12) aufweist, **dadurch gekennzeichnet, dass** der zumindest eine Kraftsensor (1, 2, 3) in einem Wandelement (8a) in jedem Festkörpergelenk (10) zumindest zwei integrierte piezoresistive elektrische Widerstände (12) aufweist und an diesem Wandelement (8a) durchgehende Leiterbahnen (17) zum Durchleiten von Speisespannung zu piezoresistiven Widerständen (12) des weiteren Kraftsensors (1, 2, 3) aufgebracht sind.

2. Mikrotaster nach Anspruch 1, **dadurch gekennzeichnet, dass** die Wandelemente (8a, 8b) außerhalb der Festkörpergelenke (10) eine Biegesteifigkeit parallel zu den Festkörpergelenken (10) aufweisen, die zumindest 10-fach höher als die Biegesteifigkeit der Festkörpergelenke (10) ist.

3. Mikrotaster nach einem der voranstehenden Ansprüche, **dadurch gekennzeichnet, dass** die Wandelemente (8a, 8b) aus Silizium sind und die Festkörpergelenke (10) eine Dicke von 10 bis 50 µm aufweisen.

4. Mikrotaster nach einem der voranstehenden Ansprüche, **dadurch gekennzeichnet, dass** zumindest eines der Wandelemente (8a, 8b) in jedem Festkörpergelenk (10) zumindest zwei integrierte piezoresistive elektrische Widerstände (12) aufweist, die mit einer Wheatstone-Brückenschaltung verbunden sind.

5. Mikrotaster nach einem der voranstehenden Ansprüche, **dadurch gekennzeichnet, dass** der Mikrotaster zumindest zwei aneinander in einer Reihe miteinander verbundene Kraftsensoren (1, 2, 3) aufweist, die jeweils orthogonal zueinander angeordnet sind

6. Mikrotaster nach einem der voranstehenden Ansprüche, **dadurch gekennzeichnet, dass** zwei Kraftsensoren (1, 2) miteinander verbunden sind, wobei sich deren Wandelemente (8a, 8b) ihrer Länge nach parallel zu derselben gemeinsamen Achse (4) erstrecken.

7. Mikrotaster nach einem der voranstehenden Ansprüche, **dadurch gekennzeichnet, dass** ein erster Kraftsensor (1) mit einem weiteren Kraftsensor (2, 3) durch ein Verbindungsstück (7) verbunden ist, das ein Zwischenstück (6) des ersten Kraftsensors (1) mit dem Zwischenstück (6) des weiteren Kraftsensors (2, 3) starr verbindet, wobei der erste Kraftsensor (1) mittig und senkrecht zum weiteren Kraftsensor (2, 3) angeordnet ist.

8. Mikrotaster nach einem der voranstehenden Ansprüche, **dadurch gekennzeichnet, dass** zumindest ein Kraftsensor (1, 2, 3) in einem Wandelement (8a) in jedem Festkörpergelenk (10) zumindest zwei integrierte piezoresistive elektrische Widerstände (12) aufweist und an dem anderen Wandelement (8b) zumindest vier durchgehende Leiterbahnen (21) aufweist, die sich längs dieses Wandelements (8b) erstrecken und an ihren Enden jeweils Anschlussflächen (18) aufweisen.

9. Mikrotaster nach einem der voranstehenden Ansprüche, **dadurch gekennzeichnet, dass** zwei Kraftsensoren (1, 2, 3) an beabstandeten, insbesondere an gegenüberliegenden Seiten eines Verbindungsstücks (7) festgelegt sind, das durchgehende Leitungen (20) aufweist, die sich zwischen den Seiten des Verbindungsstücks erstrecken, an denen die Kraftsensoren (1, 2, 3) festgelegt sind.

10. Mikrotaster nach einem der voranstehenden Ansprüche, **dadurch gekennzeichnet, dass** ein Zwischenstück (6) zumindest eines Kraftsensors (1, 2, 3) die Stirnflächen der Wandelemente (8a, 8b) überragt und in einer Ausnehmung (19) eines Verbindungsstücks (7) angeordnet ist, das zwischen zwei Kraftsensoren (1, 2, 3) angeordnet ist.

11. Mikrotaster nach einem der voranstehenden Ansprüche, **dadurch gekennzeichnet, dass** die Zwischenstücke (6) aus Silizium, Glas oder Keramik sind.

12. Mikrotaster nach einem der Ansprüche 1 bis 10, **dadurch gekennzeichnet, dass** die Zwischenstücke einstückig auf der zweiten Oberfläche des ersten und/oder des zweiten Wandelements erzeugt sind.

13. Verfahren zur Herstellung eines Mikrotasters nach einem der voranstehenden Ansprüche mit den Schritten
a. auf einer ersten Oberfläche (14a) eines ersten Siliziumwafers (15) Erzeugen von piezoresistiven Widerständen (12) jeweils paarweise in beabstandeten parallelen ersten Bereichen, auf der gegenüberliegenden zweiten Oberfläche (14b) Ätzen, bis nur in den parallelen Bereichen gegenüber den piezoresistiven Widerständen (12) Silizium entfernt ist, um dort einstückig ausgebildete Festkörpergelenke (10) zu erzeugen, Kontaktieren der piezoresistiven Widerstände (12) mit Leiterbahnen (17),
b. auf einer der ersten Oberfläche (14a) gegenüberliegenden zweiten Oberfläche (14b) eines zweiten Siliziumwafers (16) Ätzen nur in Bereichen, die sich gleich den ersten Bereichen erstrecken und angeordnet sind, um einstückig ausgebildete zweite Festkörpergelenke (10) zu erzeugen,
c. Bereitstellen und Anordnen von Zwischenstücken (6) an dem ersten Siliziumwafer (15) und dem zweiten Siliziumwafer (16),
d. Verbinden des ersten Siliziumwafers (15) und des zweiten Siliziumwafers (16) unter Einschluss von Zwischenstücken (6),
e. Zertrennen des ersten Siliziumwafers (15) und des zweiten Siliziumwafers (16) in Wandelemente (8a, 8b), die jeweils zwei erste Bereiche umfassen, die zwischen zwei Zwischenstücken (6) angeordnet sind, um damit vereinzelte Kraftsensoren (1, 2, 3) herzustellen.

14. Verfahren nach Anspruch 13, **dadurch gekennzeichnet, dass** in Schritt c. die Zwischenstücke (6) dadurch bereitgestellt und angeordnet werden, dass sie in einem dritten Siliziumwafer durch Entfernen jeweils des Bereichs, um den zwei Zwischenstücke (6) beabstandet sind, hergestellt werden, wobei die Zwischenstücke (6) in dem dritten Siliziumwafer gehalten werden, und dass vor Schritt d. die in dem dritten Siliziumwafer gehaltenen Zwischenstücke (6) zwischen dem ersten und zweiten Siliziumwafer (15, 16) angeordnet werden.

15. Verfahren nach Anspruch 13, **dadurch gekennzeichnet, dass** in Schritt c. die Zwischenstücke (6) dadurch bereitgestellt und angeordnet sind, dass sie als Erhebungen einstückig auf dem ersten und/oder auf dem zweiten Siliziumwafer (15, 16) erzeugt werden.

16. Verfahren nach einem der Ansprüche 13 bis 15, **gekennzeichnet durch** den Schritt f. des Verbindens von zumindest zwei Kraftsensoren (1, 2, 3) orthogonal zueinander, so dass der Mikrotaster zumindest zwei aneinander in einer Reihe miteinander verbundene Kraftsensoren (1, 2, 3) aufweist, die jeweils orthogonal zueinander angeordnet sind.

17. Verfahren nach einem der Ansprüche 13 bis 16, **dadurch gekennzeichnet, dass** das Verbinden in Schritt d. mittels eines Klebstoffs, durch Diffusionsschweißen durch anodisches, eutektisches oder direktes Fügen erfolgt.

18. Verfahren nach einem der Ansprüche 13 bis 17, **dadurch gekennzeichnet, dass** in Schritt d. die zweite Oberfläche (14b) des ersten Siliziumwafers (15) und die zweite Oberfläche (14b) des zweiten Siliziumwafers (16) durch die Zwischenstücke (6) verbunden werden.

19. Verfahren nach einem der Ansprüche 13 bis 18, **dadurch gekennzeichnet, dass** auf der ersten und/oder auf der zweiten Oberfläche (14a, 14b) des zweiten Siliziumwafers (16) zumindest vier durchgehende Leiterbahnen (21) angebracht werden, die in Anschlussflächen (18) in den Bereichen enden, mit denen die Zwischenstücke (6) verbunden sind.

20. Verfahren nach einem der Ansprüche 13 bis 19, **dadurch gekennzeichnet, dass** in Schritt f. jeweils ein Verbindungsstück (7) zwischen zwei Kraftsensoren (1, 2, 3) angeordnet wird und das Zwischenstück (7) zumindest eines Kraftsensors (1, 2, 3) die Stirnflächen der Wandelemente (8a, 8b) überragt und in einer Ausnehmung (19) eines Verbindungsstücks (7) angeordnet wird.

21. Verfahren nach einem der Ansprüche 13 bis 20, **dadurch gekennzeichnet, dass** das Verbindungsstück (7) durchgehende Leitungen (20) aufweist, die auf den Oberflächen enden, an denen Kraftsensoren (1, 2, 3) angeordnet sind und die durchgehenden Leitungen (20) elektrisch mit den Leiterbahnen (17) der Kraftsensoren (1, 2, 3) verbunden werden.

## Claims

1. Micro probe having at least one force sensor (1, 2, 3) and a further force sensor (1, 2, 3), wherein each force sensor (1, 2, 3) has two wall elements (8a, 8b) in parallel to one another that are connected at a distance to one another by means of spacers (6) that are attached to the ends (5) of the wall elements (8a, 8b), wherein each wall element (8a, 8b) has two solid state hinges (10) that are spaced apart and arranged orthogonally to the longitudinal extension (11) of the wall element (8a, 8b) and that are formed in parallel and single-pieced within the wall element (8a, 8b), wherein the wall elements (8a, 8b) are pivotable only at the solid state hinges (10) and in parallel to one another, and at least one of the wall elements (8a, 8b) has at least one integrated piezoresistive electrical resistor (12) within at least one solid state hinge (10), **characterized in that** the at least one force sensor (1, 2, 3) has at least two integrated piezoresistive electrical resistors (12) within one wall element (8a) within each solid state hinge (10) and **in that** continuous conducting paths (17) for conducting supply voltage through to piezoresistive resistors (12) of the additional force sensor (1, 2, 3) are applied to said wall element (8a).

2. Micro probe according to claim 1, **characterized in that** the wall elements (8a, 8b) outside of the solid state hinges (10) have a bending stiffness in parallel to the solid state hinges (10) that is at least 10-fold higher than the bending stiffness of the solid state hinges (10).

3. Micro probe according to one of the preceding claims, **characterized in that** the wall elements (8a, 8b) are of silicon and the solid state hinges (10) have a thickness of 10 to 50 µm.

4. Micro probe according to one of the preceding claims, **characterized in that** at least one of the wall elements (8a, 8b) within each solid state hinge (10) has at least two integrated piezoresistive electrical resistors (12) that are connected with a Wheatstone bridge circuit.

5. Micro probe according to one of the preceding claims, **characterized in that** the micro probe has at least two force sensors (1, 2, 3) that are connected at one another in one series to one another and that are each arranged orthogonally to one another.

6. Micro probe according to one of the preceding claims, **characterized in that** two force sensors (1, 2) are connected to one another, wherein their wall elements (8a, 8b) extend lengthwise in parallel to the same common axis (4).

7. Micro probe according to one of the preceding claims, **characterized in that** a first force sensor (1) is connected to a further force sensor (2, 3) by means of a connector (7) that rigidly connects a spacer (6) of the first force sensor (1) to the spacer (6) of the further force sensor (2, 3), wherein the first force sensor (1) is arranged centrally and orthogonally to the further force sensor (2, 3).

8. Micro probe according to one of the preceding claims, **characterized in that** at least one force sensor (1, 2, 3) has at least two integrated piezoresistive electrical resistors (12) within one wall element (8a) within each solid state hinge (10), and at the other wall element (8b) has at least four continuous conducting paths (21) that extend along said wall element (8b) and that each have connection faces (18) at their ends.

9. Micro probe according to one of the preceding claims, **characterized in that** two force sensors (1, 2, 3) are attached at spaced-apart, in particular opposite, sides of a connector (7) having continuous lines (20) that extend between those sides of the connector (7) at which the force sensors are attached.

10. Micro probe according to one of the preceding claims, **characterized in that** one spacer (6) of at least one force sensor (1, 2, 3) protrudes over the front faces of the wall elements (8a, 8b) and is arranged within a recess (19) of a connector (7) that is arranged between two force sensors (1, 2, 3).

11. Micro probe according to one of the preceding claims, **characterized in that** the spacers (6) are of silicon, glass, or ceramic.

12. Micro probe according to one of claims 1 to 10, **characterized in that** the spacers (6) are generated single-pieced on the second surface of the first and/or of the second wall element (8a, 8b).

13. Process for the production of a micro probe according to one of the preceding claims having the steps
a. on a first surface (14a) of a first silicon wafer (15) generating piezoresistive resistors (12), each pair-wise within spaced-apart parallel first areas, on the opposite second surface (14b) etching until silicon is removed only within the parallel areas opposite of the piezoresistive resistors (12) in order to generate solid state hinges (10) there that are formed single-pieced, contacting the piezoresistive resistors (12) with conducting paths (17),
b. on a second surface (14b) of a second silicon wafer (16) that lies opposite of the first surface (14a), etching only within areas that extend equal to the first areas and that are arranged to generate second solid state hinges (10) that are formed single-pieced,
c. providing and arranging spacers (6) at the first silicon wafer (15) and the second silicon wafer (16),
d. connecting the first silicon wafer (15) and the second silicon wafer (16) while integrating spacers (6),
e. separating the first silicon wafer (15) and the second silicon wafer (16) into wall elements (8a, 8b) that each encompass two first areas that are arranged between two spacers (6) so as to produce separate force sensors (1, 2, 3).

14. Process according to claim 13, **characterized in that** in step c. the spacers (6) are provided and arranged due to that they are produced in a third silicon wafer by removing of each respective area by which two spacers (6) are spaced apart, wherein the spacers (6) are held in the third silicon wafer, and **in that** prior to step d. the spacers (6) held in the third silicon wafer are arranged between the first and second silicon wafers (15, 16).

15. Process according to claim 13, **characterized in that** in step c. the spacers (6) are provided and arranged by generating them as elevations on the first and/or on the second silicon wafers (15, 16) in a single-pieced manner.

16. Process according to one of claims 13 to 15, **characterized by** the step f. of connecting at least two force sensors (1, 2, 3) orthogonally to one another, so that the micro probe has at least two force sensors (1, 2, 3) that are connected at one another in one series to one another and that are each arranged orthogonally to one another.

17. Process according to one of claims 13 to 16, **characterized in that** the connecting in step d. occurs by means of an adhesive, by diffusion bonding, by anodic, eutectic or direct joining.

18. Process according to one of claims 13 to 17, **characterized in that** in step d. the second surface (14b) of the first silicon wafer (15) and the second surface (14b) of the second silicon wafer (16) are being connected by the spacers (6).

19. Process according to one of claims 13 to 18, **characterized in that** on the first and/or on the second surface (14a, 14b) of the second silicon wafer (16) at least four continuous conducting paths (21) are attached that end in connection faces (18) in those areas to which the spacers (6) are connected.

20. Process according to one of claims 13 to 19, **characterized in that** in step f. one connector (7) each is arranged between two force sensors (1, 2, 3) and the spacer (6) of at least one force sensor (1, 2, 3) protrudes over the front faces of the wall elements (8a, 8b) and is arranged within a recess (19) of a connector (7).

21. Process according to one of claims 13 to 20, **characterized in that** the connector (7) has continuous lines (20) that end on those surfaces on which force sensors (1, 2, 3) are arranged, and **in that** the continuous lines (20) are electrically connected to the conducting paths (17) of the force sensors (1, 2, 3).

## Revendications

1. Micro-palpeur avec au moins un capteur de force (1, 2, 3) et un autre capteur de force (1, 2, 3), dans lequel chaque capteur de force (1, 2, 3) présente deux éléments de paroi (8a, 8b) parallèles l'un à l'autre, qui sont reliés à une distance l'un de l'autre par des pièces intermédiaires (6) qui sont fixées aux extrémités (5) des éléments de paroi (8a, 8b), chaque élément de paroi (8a, 8b) présentant deux articulations solides (10) espacées et disposées perpendiculairement à son étendue longitudinale (11) et parallèles l'une à l'autre et formées en une seule pièce dans l'élément de paroi (8a, 8b), les éléments de paroi (8a, 8b) ne pouvant être pivotés qu'aux articulations solides (10) et parallèlement l'un par rapport à l'autre, et au moins l'un des éléments de paroi (8a, 8b) dans au moins une articulation solide (10) présentant au moins une résistance (12) électrique piézorésistive intégrée, **caractérisé en ce que** l'au moins un capteur de force (1, 2, 3) dans un élément de paroi (8a) dans chaque articulation solide (10) présente au moins deux résistances (12) électriques piézorésistives intégrées et des pistes conductrices (17) continues se trouvent sur cet élément de paroi (8a) pour conduire de la tension d'alimentation à des résistances piézorésistives (12) de l'autre capteur de forces (1, 2, 3).

2. Micro-palpeur selon la revendication 1, **caractérisé en ce que** les éléments de paroi (8a, 8b) en dehors des articulations solides (10) présentent une raideur en flexion parallèle aux articulations solides (10) qui est au moins 10 fois plus élevée que la raideur en flexion des articulations solides (10).

3. Micro-palpeur selon l'une des revendications précédentes, **caractérisé en ce que** les éléments de paroi (8a, 8b) sont en silicium et les articulations solides (10) présentent une épaisseur de 10 à 50 µm.

4. Micro-palpeur selon l'une des revendications précédentes, **caractérisé en ce qu'**au moins l'un des éléments de paroi (8a, 8b) dans chaque articulation solide (10) présente au moins deux résistances (12) électriques piézorésistives intégrées qui sont reliées à un circuit à pont de Wheatstone.

5. Micro-palpeur selon l'une des revendications précédentes, **caractérisé en ce que** le micro-palpeur présente au moins deux capteurs de force (1, 2, 3) directement reliés entre eux en série, qui sont respectivement disposés orthogonalement l'un par rapport à l'autre.

6. Micro-palpeur selon l'une des revendications précédentes, **caractérisé en ce que** deux capteurs de force (1, 2) sont reliés entre eux, leurs éléments de paroi (8a, 8b) s'étendant dans le sens de leur longueur parallèlement au même axe en commun (4).

7. Micro-palpeur selon l'une des revendications précédentes, **caractérisé en ce qu'**un premier capteur de force (1) est relié à un autre capteur de force (2, 3) par une pièce de liaison (7), qui relie une pièce intermédiaire (6) du premier capteur de force (1) à la pièce intermédiaire (6) de l'autre capteur de force (2, 3) de manière fixée, le premier capteur de force (1) étant disposé de manière centrée et perpendiculairement à l'autre capteur de force (2, 3).

8. Micro-palpeur selon l'une des revendications précédentes, **caractérisé en ce qu'**au moins un capteur de force (1, 2, 3) dans un élément de paroi (8a) dans chaque articulation solide (10) présente au moins deux résistances (12) électriques piézorésistives intégrées et au moins quatre pistes conductrices continues (21) sur l'autre élément de paroi (8b), qui s'étendent le long de cet élément de paroi (8b) et respectivement présentent à leurs extrémités des surfaces de connexion (18).

9. Micro-palpeur selon l'une des revendications précédentes, **caractérisé en ce que** deux capteurs de force (1, 2, 3) sont fixés sur des flancs espacés, en particulier opposés, d'une pièce de liaison (7), qui présente des fils conducteurs (20) continus s'étendant entre les flancs de la pièce de liaison sur lesquels les capteurs de force (1, 2, 3) sont fixés.

10. Micro-palpeur selon l'une des revendications précédentes, **caractérisé en ce qu'**une pièce intermédiaire (6) d'au moins un capteur de force (1, 2, 3) dépasse les faces des éléments de paroi (8a, 8b) et est disposée dans une cavité (19) d'une pièce de liaison (7), qui est disposé entre deux capteurs de force (1, 2, 3).

11. Micro-palpeur selon l'une des revendications précédentes, **caractérisé en ce que** les pièces intermédiaires (6) sont en silicium, en verre ou en céramique.

12. Micro-palpeur selon l'une des revendications 1 à 10, **caractérisé en ce que** les pièces intermédiaires sont produites en une seule pièce sur la deuxième surface du premier et/ou du deuxième élément de paroi.

13. Procédé de fabrication d'un micro-palpeur selon l'une des revendications précédentes comprenant les étapes
a. générer, sur une première surface (14a) d'une première tranche de silicium (15), des résistances (12) piézorésistives respectivement par paires dans des premières zones parallèles espacées ; graver, sur la deuxième surface (14b) en face, jusqu'à ce que le silicium ne soit enlevé que dans les zones parallèles en face des résistances (12) piézorésistives, afin d'y produire des articulations solides (10) formées en une seule pièce ; mettre les résistances (12) piézorésistives en contact avec les pistes conductrices (17),
b. sur une deuxième surface (14b) d'une deuxième tranche de silicium (16) en face de la première surface (14a), ne graver que dans des zones s'étendant pareillement aux premières zones et étant disposées pour produire deuxièmes articulations solides (10) formées en une seule pièce,
c. fournir et disposer des pièces intermédiaires (6) sur la première tranche de silicium (15) et la deuxième tranche de silicium (16),
d. relier la première tranche de silicium (15) et la deuxième tranche de silicium (16) en y incluant des pièces intermédiaires (6),
e. séparer la première tranche de silicium (15) et la deuxième tranche de silicium (16) en éléments de paroi (8a, 8b), qui respectivement comprennent deux premières zones disposées entre deux pièces intermédiaires (6), afin d'en fabriquer des capteurs de force (1, 2, 3) individuels.

14. Procédé selon la revendication 13, **caractérisé en ce que**, à l'étape c., les pièces intermédiaires (6) sont fournies et disposées en les fabriquant dans une troisième tranche de silicium par l'enlèvement respectivement de la zone par laquelle deux pièces intermédiaires (6) sont espacées, les pièces intermédiaires (6) étant tenues dans la troisième tranche de silicium, et **en ce que**, avant l'étape d., les pièces intermédiaires (6) tenues dans la troisième tranche de silicium sont disposées entre la première et la deuxième tranche de silicium (15, 16).

15. Procédé selon la revendication 13, **caractérisé en ce que**, à l'étape c., les pièces intermédiaires (6) sont fournies et disposées en les produisant en une seule pièce sur la première et/ou sur la deuxième tranche de silicium (15, 16).

16. Procédé selon l'une des revendications 13 à 15, **caractérisé par** l'étape f de la liaison d'au moins deux capteurs de force (1, 2, 3) de manière orthogonale l'un par rapport à l'autre, afin que le micro-palpeur présente au moins deux capteurs de force (1, 2, 3) directement reliés entre eux en série, qui sont respectivement disposés de manière orthogonale l'un par rapport à l'autre.

17. Procédé selon l'une des revendications 13 à 16, **caractérisé en ce que** la liaison à l'étape d. s'effectue au moyen d'un adhésif, par soudage par diffusion, par soudure anodique, eutectique ou directe.

18. Procédé selon l'une des revendications 13 à 17, **caractérisé en ce que**, à l'étape d, la deuxième surface (14b) de la première tranche de silicium (15) et la deuxième surface (14b) de la deuxième tranche de silicium (16) sont reliées par les pièces intermédiaires (6).

19. Procédé selon l'une des revendications 13 à 18, **caractérisé en ce que**, sur la première et/ou sur la deuxième surface (14a, 14b) de la deuxième tranche de silicium (16) se trouvent au moins quatre pistes conductrices (21) continues, qui se terminent en surfaces de connexion (18) dans les zones auxquelles les pièces intermédiaires (6) sont reliées.

20. Procédé selon l'une des revendications 13 à 19, **caractérisé en ce que**, à l'étape f, une pièce de liaison (7) est respectivement disposée entre deux capteurs de force (1, 2, 3), et la pièce intermédiaire (7) d'au moins un capteur de force (1, 2, 3) dépasse les faces des éléments de paroi (8a, 8b) et est disposée dans une cavité (19) d'une pièce de liaison (7).

21. Procédé selon l'une des revendications 13 à 20, **caractérisé en ce que** la pièce de liaison (7) présente des fils conducteurs (20) continus qui se terminent sur les surfaces sur lesquelles des capteurs de force (1, 2, 3) sont disposés, et les fils conducteurs (20) continus sont électriquement reliés aux pistes conductrices (17) des capteurs de force (1, 2, 3).
